# DEMANDE DE BREVET EUROPEEN

(11) **EP 2 605 534 A2**
(43) Date de publication de la demande: **19.06.2013**
(21) Numéro de dépôt: 12196484.5
(22) Date de dépôt: 11.12.2012
(51) Int. Cl.: H04N 21/4788, H04N 21/84, H04N 21/414, H04N 21/4147, H04L 29/06, H04W 4/12

(54) **Enrichissement, gestion de contenus multimédia et établissement d'une communication en fonction de contenus multimédia enrichis**

(30) Priorité: 12.12.2011 FR 1161485
(71) Demandeur: France Télécom, 75015 Paris (FR)
(72) Inventeur: Lamotte, Sandrine, 22300 SAINT MICHEL EN GREVE (FR); Seureau, Cédric, 22300 LANNION (FR); Haute, Philippe, 22590 TREGOMEUR (FR)

(57) **Abrégé**

L'invention concerne un enrichissement de contenus multimédia, une gestion de contenus multimédia et un établissement d'une communication en fonction de contenus multimédia enrichis.

Un objet de l'invention est un procédé d'enrichissement de contenus multimédia comportant une association d'au moins un identifiant d'un premier utilisateur avec un contenu multimédia lors d'une gestion dudit contenu par un terminal de communication dudit premier utilisateur, ladite association permettant à un deuxième utilisateur ayant accès audit contenu multimédia de demander un établissement d'une communication entre un terminal de communication dudit deuxième utilisateur et un terminal de communication dudit premier utilisateur en utilisant un desdits au moins un identifiant dudit premier utilisateur.

## Description

L'invention concerne un enrichissement de contenus multimédia, une gestion de contenus multimédia et un établissement d'une communication en fonction de contenus multimédia enrichis.

Le partage ou l'envoi de photo par email puis par MMS est une pratique apparue au milieu des années 2000 avec le développement commercial grand public respectivement des appareils photo numériques et des téléphones mobiles dotés d'appareil photo numérique, et de l'accès Internet haut débit.

Ainsi un utilisateur de téléphone mobile peut choisir entre différents modes de partage et/ou d'envoie de ses photos à ses proches : email, messagerie instantanée, MMS, partage, publication sur un réseau social, etc.

Lorsqu'un interlocuteur reçoit une photographie par email, messagerie instantanée, MMS, il n'a souvent d'autre choix pour répondre à la personne émettrice de la photo que de répondre par le même mode de communication à savoir, respectivement, par email, messagerie instantanée, MMS. De même, lorsqu'un interlocuteur regarde une photographie partagée ou publiée par une personne.

La réponse par un mode de communication distinct du mode de communication porteur de la photographie est souvent plus complexe car cette réponse nécessitera, de la part de l'interlocuteur :
- de rechercher le contact soit dans son carnet d'adresse privé soit sur un annuaire public pour retrouver un identifiant de communication : numéro de téléphone, adresse email, adresse du profil d'un réseau social de la personne émettrice de la photographie,
- puis de lancer le service correspondant au mode de communication choisi avant de pouvoir répondre.

En outre, les albums photo numériques sont, aujourd'hui souvent constitué de photographies personnelles et de photographies reçues, par exemple, dans un message et enregistrées sur un terminal de communication personnel ou dans un espace de stockage privé. Lorsqu'en consultant un album photo personnel, un interlocuteur souhaite communiquer avec l'auteur de la photographie regardé : il a quelque fois la possibilité d'en retrouver l'auteur dans des données associées à la photographie. L'interlocuteur pourra avoir à retrouver l'auteur de la photographie ou la personne lui ayant transmis cette photographie ce qui pourra s'avérer complexe voire impossible. Néanmoins, si l'interlocuteur retrouve cette personne, l'établissement de la communication avec cette personne restera complexe car nécessitera là encore de retrouver le contact et de lancer le service de communication souhaité.

Un des buts de la présente invention est de remédier à des insuffisances de l'état de la technique.

Un objet de l'invention est un procédé d'enrichissement de contenus multimédia comportant une association d'au moins un identifiant d'un premier utilisateur avec un contenu multimédia lors d'une gestion dudit contenu par un terminal de communication dudit premier utilisateur, ladite association permettant à un deuxième utilisateur ayant accès audit contenu multimédia de demander un établissement d'une communication entre un terminal de communication dudit deuxième utilisateur et un terminal de communication dudit premier utilisateur en utilisant un desdits au moins un identifiant dudit premier utilisateur.

Ainsi, le deuxième utilisateur recevant ou consultant un contenu multimédia ainsi enrichi pourra être mis en relation de manière simple avec le premier utilisateur.

Avantageusement, ledit procédé d'enrichissement comporte une recherche d'au moins un identifiant dudit premier utilisateur préalablement à ladite association.

Ainsi, tous les contenus multimédia provenant du premier utilisateur seront enrichis facilitant la mise en relation pour l'ensemble des destinataires de contenus multimédia du premier utilisateur.

Avantageusement, ledit procédé d'enrichissement comporte une sélection d'au moins un identifiant dudit premier utilisateur préalablement à ladite association.

Ainsi, le premier utilisateur peut limiter les terminaux de communication et/ou les modes de communication du premier utilisateur avec lesquels les destinataires d'un contenu multimédia enrichi peuvent demander une mise en relation.

Avantageusement, ladite association est effectuée par écriture desdites au moins un identifiant dudit premier utilisateur dans au moins une métadonnée dudit contenu multimédia.

Ainsi, l'identifiant permettant la mise en relation est directement transporté par le fichier contenu multimédia avec le contenu multimédia utile : à savoir qu'un fichier photo transmis comporte les données utiles permettant de former l'image photo et des métadonnées dans laquelle sont généralement inscrites la résolution de l'image, la dimension de l'image, etc. et dans le cadre de l'invention un identifiant du premier utilisateur. Ainsi, le terminal de communication du deuxième utilisateur recevra avec les données utiles de l'image l'identifiant du premier utilisateur et n'aura pas à rechercher cet identifiant associé à cette photo notamment dans une base de données d'un réseau de communication.

Avantageusement, selon une implémentation de l'invention, les différentes étapes du procédé selon l'invention sont mises en oeuvre par un logiciel ou programme d'ordinateur, ce logiciel comprenant des instructions logicielles destinées à être exécutées par un processeur de données d'un dispositif d'enrichissement et étant conçus pour commander l'exécution des différentes étapes de ce procédé.

L'invention vise donc aussi un programme comprenant des instructions de code de programme pour l'exécution des étapes du procédé d'enrichissement de contenus multimédia selon l'une quelconque des revendications précédentes lorsque ledit programme est exécuté par un processeur.

Un autre objet de l'invention est un dispositif d'enrichissement de contenus multimédia comportant des moyens d'association d'au moins un identifiant d'un premier utilisateur avec un contenu multimédia lors d'une gestion dudit contenu par un terminal de communication dudit premier utilisateur, ladite association permettant à un deuxième utilisateur ayant accès audit contenu multimédia de demander l'établissement d'une communication entre un terminal de communication dudit deuxième utilisateur et un terminal de communication dudit premier utilisateur en utilisant un desdits au moins un identifiant dudit premier utilisateur.

Un objet de l'invention est aussi un procédé de gestion de contenus multimédia comportant, suite à une demande de gestion d'un contenu multimédia par un terminal de communication d'un premier utilisateur, une association d'au moins un identifiant dudit premier utilisateur avec ledit contenu multimédia lors de ladite gestion dudit contenu multimédia, ladite association permettant à un deuxième utilisateur ayant accès audit contenu multimédia de demander l'établissement d'une communication entre un terminal de communication dudit deuxième utilisateur et un terminal de communication dudit premier utilisateur en utilisant un desdits au moins un identifiant dudit premier utilisateur.

Ainsi, lorsqu'un premier utilisateur crée, envoie, publie, partage, etc. un contenus multimédias, celui-ci est automatiquement enrichi par un identifiant du premier utilisateur permettant ensuite à un deuxième utilisateur recevant ou consultant ce contenu multimédia enrichi d'être mis en relation de manière simple avec le premier utilisateur.

Avantageusement, selon une implémentation de l'invention, les différentes étapes du procédé selon l'invention sont mises en oeuvre par un logiciel ou programme d'ordinateur, ce logiciel comprenant des instructions logicielles destinées à être exécutées par un processeur de données d'un dispositif faisant partie d'un terminal de communication et étant conçus pour commander l'exécution des différentes étapes de ce procédé.

L'invention vise donc aussi un programme comprenant des instructions de code de programme pour l'exécution des étapes du procédé de gestion de contenus multimédias selon la revendication précédente lorsque ledit programme est exécuté par un processeur.

Un objet de l'invention est encore un dispositif de gestion de contenus multimédia comportant des moyens d'association, suite à une demande de gestion d'un contenu multimédia par un terminal de communication d'un premier utilisateur, d'au moins un identifiant dudit premier utilisateur avec ledit contenu multimédia lors de ladite gestion dudit contenu multimédia, ladite association permettant à un deuxième utilisateur ayant accès audit contenu multimédia de demander l'établissement d'une communication entre un terminal de communication dudit deuxième utilisateur et un terminal de communication dudit premier utilisateur en utilisant un desdits au moins un identifiant dudit premier utilisateur.

Un objet de l'invention est un terminal de communication comportant un dispositif de gestion de contenus multimédia associant, suite à une demande de gestion d'un contenu multimédia par un terminal de communication d'un premier utilisateur, d'au moins un identifiant dudit premier utilisateur avec ledit contenu multimédia lors de ladite gestion dudit contenu multimédia, , ladite association permettant à un deuxième utilisateur ayant accès audit contenu multimédia de demander l'établissement d'une communication entre un terminal de communication dudit deuxième utilisateur et un terminal de communication dudit premier utilisateur en utilisant un desdits au moins un identifiant dudit premier utilisateur.

Ainsi, l'opération d'enrichissement est directement mise en oeuvre dans le terminal de communication du premier utilisateur.

Un autre objet de l'invention est un dispositif de fourniture de services comportant un dispositif de gestion de contenus multimédia apte à associer, suite à une demande de gestion d'un contenu multimédia par un terminal de communication d'un premier utilisateur, d'au moins un identifiant dudit premier utilisateur avec ledit contenu multimédia lors de ladite gestion dudit contenu multimédia, , ladite association permettant à un deuxième utilisateur ayant accès audit contenu multimédia de demander l'établissement d'une communication entre un terminal de communication dudit deuxième utilisateur et un terminal de communication dudit premier utilisateur en utilisant un desdits au moins un identifiant dudit premier utilisateur.

Ainsi, un fournisseur de service notamment un fournisseur de service de gestion de contenus multimédia, tel qu'un service de création de photo et d'album photo, pourra proposé à ses utilisateurs cet enrichissement du contenu multimédia.

Un objet de l'invention est en outre un procédé d"établissement de communication d'un terminal d'un deuxième utilisateur avec un terminal d'un premier utilisateur comportant, suite à une demande de communication d'un deuxième utilisateur lors d'un accès à un contenu multimédia enrichi d'au moins un identifiant d'un premier utilisateur, une émission d'un message dudit terminal de communication dudit deuxième utilisateur vers un terminal de communication dudit premier utilisateur utilisant un desdits au moins un identifiant dudit premier utilisateur.

Ainsi, un deuxième utilisateur n'aura pas à rechercher dans ses contacts ou dans un annuaire public un identifiant du premier utilisateur pour être mis en communication avec lui s'il souhaite changer de mode de communication par rapport au mode de communication utilisé pour la transmission du contenu multimédia.

Avantageusement, selon une implémentation de l'invention, les différentes étapes du procédé selon l'invention sont mises en oeuvre par un logiciel ou programme d'ordinateur, ce logiciel comprenant des instructions logicielles destinées à être exécutées par un processeur de données d'un dispositif faisant partie d'un terminal de communication et étant conçus pour commander l'exécution des différentes étapes de ce procédé.

L'invention vise donc aussi un programme comprenant des instructions de code de programme pour l'exécution des étapes du procédé d'établissement de communication selon la revendication précédente lorsque ledit programme est exécuté par un processeur.

Ces programmes peuvent utiliser n'importe quel langage de programmation et être sous la forme de code source, code objet ou code intermédiaire entre code source et code objet tel que dans une forme partiellement compilée ou dans n'importe quelle autre forme souhaitable.

Un objet de l'invention est aussi un dispositif d'établissement de communication d'un terminal d'un deuxième utilisateur avec un terminal d'un premier utilisateur comportant un émetteur d'un message, ledit message étant émis, suite à une demande de communication d'un deuxième utilisateur lors d'un accès à un contenu multimédia enrichi d'au moins un identifiant d'un premier utilisateur, dudit terminal de communication dudit deuxième utilisateur vers un terminal de communication dudit premier utilisateur utilisant un desdits au moins un identifiant dudit premier utilisateur.

Un objet de l'invention est encore un terminal de communication comportant un dispositif d'établissement de communication d'un terminal d'un deuxième utilisateur avec un terminal d'un premier utilisateur apte à émettre un message, ledit message étant émis, suite à une demande de communication d'un deuxième utilisateur lors d'un accès à un contenu multimédia enrichi d'au moins un identifiant d'un premier utilisateur, dudit terminal de communication dudit deuxième utilisateur vers un terminal de communication dudit premier utilisateur utilisant un desdits au moins un identifiant dudit premier utilisateur.

Les caractéristiques et avantages de l'invention apparaîtront plus clairement à la lecture de la description, faite à titre d'exemple, et des figures s'y rapportant qui représentent :
- Figure 1, un schéma simplifié des procédés mis en oeuvre par l'invention dans une première variante d'implémentation de l'invention dans laquelle un terminal de communication d'un utilisateur met en oeuvre un procédé d'enrichissement selon l'invention,
- Figure 2, un schéma simplifié des procédés mis en oeuvre par l'invention dans une deuxième variante d'implémentation de l'invention dans laquelle un dispositif de fourniture de service met en oeuvre un procédé d'enrichissement selon l'invention,
- Figure 3, un schéma simplifié d'une première architecture de communication implémentant un dispositif de gestion de contenu et un dispositif d'enrichissement selon l'invention dans un terminal de communication,
- Figure 4, un schéma simplifié d'une première architecture de communication implémentant un dispositif de gestion de contenu et un dispositif d'enrichissement selon l'invention dans un dispositif de fourniture de services,
- Figures 5a à 5g, des schémas d'un scénario illustrant une utilisation de l'invention.

De manière générale, l'invention propose d'associer à un contenu multimédia, lors de sa gestion par un premier utilisateur, au moins un identifiant du premier utilisateur. Ainsi, lorsqu'un deuxième utilisateur recevra du premier utilisateur ce contenu multimédia, le deuxième utilisateur pourra facilement demander d'être mise en relation avec l'émetteur de ce contenu multimédia, en l'occurrence le premier utilisateur : le terminal du deuxième utilisateur utilisant l'identifiant du premier utilisateur associé au contenu multimédia reçu pour établir une communication entre le deuxième utilisateur et le premier utilisateur.

Par contenus multimédia sont entendus tout type de contenus transmissibles par message, publication ou partage...: aussi bien de simple fichier texte avec ou sans mise en forme, des photographies, des fichiers audio et/ou vocaux, des vidéos, des applications tels que des jeux, tout outils ou moyens de traitement, etc.

Par gestion de contenus multimédia est entendu tout traitement d'un contenu multimédia tel qu'une création et/ou une modification d'un contenu multimédia, une transmission d'un contenu multimédia par message, publication, partage, etc.

Par identifiants d'un utilisateur sont entendus tout identifiant de communication tel qu'un numéro de téléphone fixe, mobile, IP, etc. mais aussi une adresse email permettant des échanges par email ou IM, etc. tout identifiant social permettant une transmission vers un utilisateur déterminé par son identifiant social de données, notamment de contenu multimédia, par exemple par partage ou publication via un réseau social ou tout autre fournisseur de services.

Par associer un identifiant à un contenu multimédia est entendu que tout terminal de communication d'un utilisateur disposant du contenu multimédia (dans son terminal de communication ou sur un dispositif de fourniture de services), une fois l'association effectué, pourra facilement avoir accès à l'identifiant associé au contenu multimédia. Notamment, l'association est enregistrée dans une base de données de contenus accessibles par l'utilisateur émetteur du contenu multimédia et l'utilisateur destinataire du contenu multimédia. Une alternative est, en particulier, que l'association engendre l'écriture de l'identifiant dans les métadonnées du contenu multimédia.

Par communication est entendu tout type de communication : communication synchrone et asynchrone, communication textuelle, vocale, Visio, etc. à savoir notamment SMS, MMS, téléphonie mobile, téléphonie fixe, VoIP, Visio, Visio IP, email, IM, mais aussi l'envoi de courrier physique (texte et/ou photo et/ou vidéo) à une adresse postale via un fournisseur de services tel que le portail Internet de La Poste transformant les messages électroniques en courriers physiques (papier, DVD, etc.), etc.

Par établissement de communication est donc entendu à la fois le simple envoi d'un message à un destinataire mais aussi l'établissement d'une session de communication pour une communication synchrone.

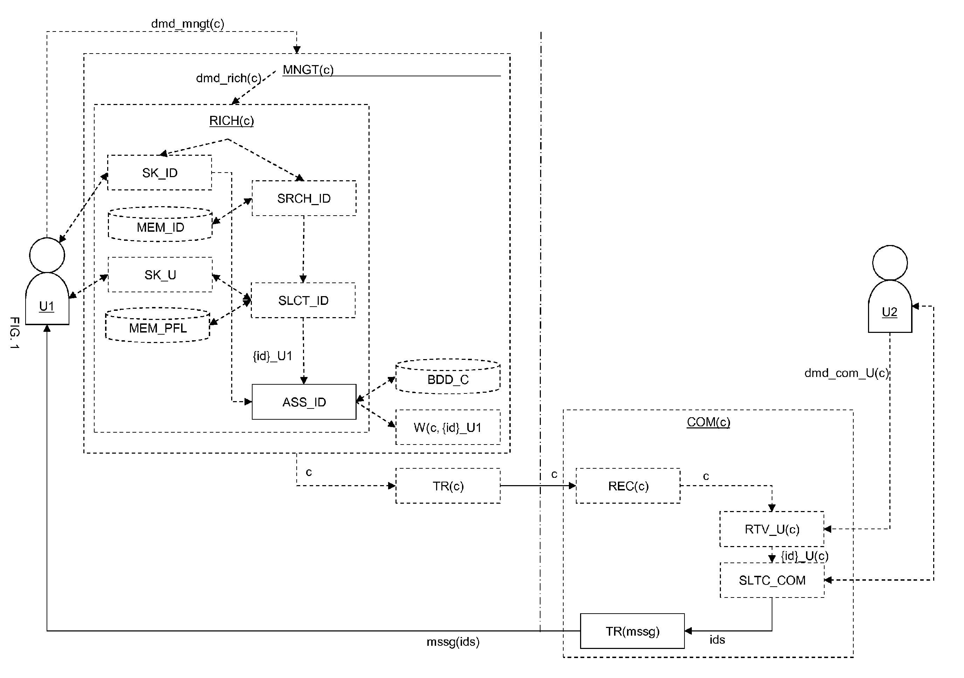

La figure 1 illustre un schéma simplifié des procédés mis en oeuvre par l'invention dans une première variante d'implémentation de l'invention dans laquelle un terminal de communication d'un utilisateur met en oeuvre un procédé d'enrichissement selon l'invention.

Un procédé d'enrichissement RICH(c) de contenus multimédia comporte une association ASS_ID d'au moins un identifiant {id}_U1 d'un premier utilisateur U1 avec un contenu multimédia c lors d'une gestion MNGT(c) dudit contenu c par un terminal de communication dudit premier utilisateur U1. L'association ASS_ID permet à un deuxième utilisateur U2 ayant accès REC(c) audit contenu multimédia c de demander un établissement d'une communication TR(mssg) entre un terminal de communication dudit deuxième utilisateur U2 et un terminal de communication dudit premier utilisateur U1 en utilisant un desdits au moins un identifiant dudit premier utilisateur ids.

En particulier, le procédé d'enrichissement RICH(c) comporte une recherche SRCH_ID d'au moins un identifiant dudit premier utilisateur U1 préalablement à ladite association ASS_ID. La recherche SRCH_ID est effectuée, notamment, dans une mémoire MEM_ID du terminal de communication du premier utilisateur U1 ou dans une base de données des identifiants du premier utilisateur (non illustré) d'un terminal de communication du premier utilisateur ou d'un dispositif de fourniture de services.

De manière alternative ou complémentaire, le procédé d'enrichissement RICH(c) comporte une demande d'identifiant SK_ID au premier utilisateur U1, notamment, via une interface du terminal de communication.

En particulier, le procédé d'enrichissement RICH(c) comporte une sélection d'au moins un identifiant dudit premier utilisateur SLCT_ID préalablement à ladite association ASS_ID. En effet, un premier utilisateur peut disposer de plusieurs identifiants : tels qu'un numéro de téléphone mobile personnel, un numéro de téléphone mobile professionnel, une adresse email professionnel, etc. Dans ce cas, le procédé d'enrichissement comportera une sélection SLCT_ID de certains de ses identifiants pour les associer au contenu multimédia : par exemple, à une photo personnelle sera associé le numéro de téléphone mobile personnel et à une présentation professionnelle sera associée l'adresse email professionnelle. Pour effectuer cette sélection SLCT_ID, le procédé d'enrichissement RICH(c) pourra utiliser de manière alternative ou complémentaire une demande de sélection à l'utilisateur SK_U et un profil de l'utilisateur stocké dans une mémoire MEM_PFL du terminal de communication du premier utilisateur. Par exemple, le profil utilisateur indiquera à une catégorie de contenus multimédia et/ou ou de destinataires du contenu multimédia, les identifiants à sélectionner en fonction de leur catégorie. Les catégories sont notamment la distinction entre personnel et professionnel ou les groupes de connaissance d'un réseau social, etc.

En particulier, l'association ASS_ID est effectué par écriture W(c, {id}_U1) desdites au moins un identifiant dudit premier utilisateur dans au moins une métadonnée dudit contenu multimédia c.

De manière alternative, l'association ASS_ID est effectué par enregistrement du contenu multimédia c ou d'un identifiant du contenu multimédia avec au moins un identifiant dudit premier utilisateur {id}_U1 dans une base de données de contenu multimédia BDD_C accessible par tout destinataire dudit contenu multimédia c.

Ce procédé d'enrichissement de contenus multimédia peut être implémenté, notamment dans un terminal de communication d'un premier utilisateur, sous la forme d'un programme comprenant des instructions de code de programme pour l'exécution des étapes du procédé d'enrichissement lorsque ledit programme est exécuté par un processeur, notamment un processeur du terminal de communication dans l'exemple illustré figure 1.

Un procédé de gestion de contenus multimédia MNGT(c) comporte, suite à une demande de gestion d'un contenu multimédia dmd_mngt(c) par un terminal de communication d'un premier utilisateur U1, l'association ASS_ID d'au moins un identifiant dudit premier utilisateur avec ledit contenu multimédia lors de ladite gestion MNGT(c) dudit contenu multimédia.

En particulier, le procédé de gestion MNGT(c) comporte le procédé d'enrichissement RICH(c) déclenché par une demande d'enrichissement dmd_rich(c) du procédé de gestion MNGT(c).

Ce procédé de gestion peut être implémenté, notamment dans un terminal de communication du premier utilisateur, sous la forme d'un programme comprenant des instructions de code de programme pour l'exécution des étapes du procédé de gestion de contenus multimédias lorsque ledit programme est exécuté par un processeur, notamment un processeur du terminal de communication du premier utilisateur.

Le procédé de gestion du contenu multimédia MNGT(c) est notamment un procédé de transmission d'un contenu multimédia c à un terminal de communication d'un deuxième utilisateur U2. De manière alternative, un contenu multimédia c déjà associé à un identifiant du premier utilisateur par le procédé d'enrichissement RICH(c) peut être émis TR(c) par le terminal de communication du premier utilisateur U1.

Un procédé d'établissement de communication COM(c) d'un terminal d'un deuxième utilisateur U2 avec un terminal d'un premier utilisateur U1 comporte, suite à une demande de communication dmd_com_U(c)d'un deuxième utilisateur U2 lors d'un accès à un contenu multimédia c enrichi d'au moins un identifiant d'un premier utilisateur U1, une émission TR(mssg) d'un message mssg(ids) dudit terminal de communication dudit deuxième utilisateur U2 vers un terminal de communication dudit premier utilisateur U1 utilisant un desdits au moins un identifiant dudit premier utilisateur ids.

En particulier, le procédé d'établissement de communication comporte une réception REC(c) par le terminal de communication du deuxième utilisateur U2 du contenu multimédia c enrichi.

Le procédé d'établissement de communication comporte, notamment, une lecture des métadonnées RTV-U(c) pour retrouver les identifiants associés au contenu multimédia reçu {id}_U(c).

Lorsqu'un contenu multimédia est associé à plusieurs types d'identifiants : numéro de téléphone, adresse email, etc., le procédé d'établissement de communication comporte, en particulier, une sélection SLTC_COM d'un identifiant qui sera utilisé pour établir la communication. La sélection SLTC_COM est notamment fonction:
- du mode de communication requis par le deuxième utilisateur dans sa demande dmd_com_U(c), ou
- d'un mode de communication sélectionné par le deuxième utilisateur parmi les modes de communication possible compte tenu des identifiants associés au contenu notamment via une interface de sélection (non illustré), ou
- d'un identifiant sélectionné par le deuxième utilisateur parmi les identifiants associés au contenu notamment via une interface de sélection (non illustré),
- etc.

Ce procédé d'établissement de communication est notamment implémenté sous la forme d'un programme comprenant des instructions de code de programme pour l'exécution des étapes du procédé d'établissement de communication lorsque ledit programme est exécuté par un processeur, tel qu'un processeur du terminal de communication du deuxième utilisateur.

De façon miroir (non illustrée), le deuxième utilisateur peut utiliser un procédé d'enrichissement sur un contenu multimédia avant de le transmettre à un autre utilisateur, notamment au premier utilisateur. Le contenu multimédia sera alors enrichi d'au moins un identifiant du deuxième utilisateur permettant au premier utilisateur utilisant le procédé d'établissement de communication selon l'invention d'établir facilement une communication à partir du contenu multimédia reçu avec le deuxième utilisateur.

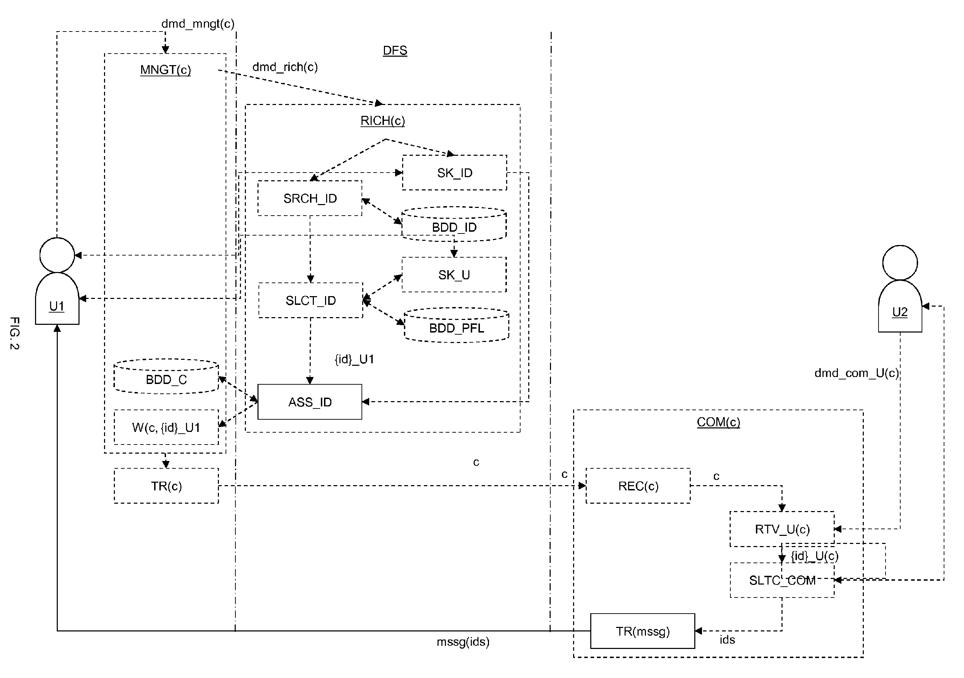

La figure 2 illustre un schéma simplifié des procédés mis en oeuvre par l'invention dans une deuxième variante d'implémentation de l'invention dans laquelle un dispositif de fourniture de service met en oeuvre un procédé d'enrichissement selon l'invention.

Dans le cas illustré par la figure 2, un procédé d'enrichissement est mis en oeuvre par un dispositif de fourniture de services DFS (en particulier un service d'enrichissement de contenus) auxquels le premier utilisateur peut avoir souscrit.

Alors, les identifiants du premier utilisateur sont notamment stockés dans une base de données d'identifiants BDD_ID du dispositif de fourniture de services DFS regroupant les identifiants des utilisateurs ayant souscrit au moins au service d'enrichissement voire à l'un quelconque des services fournis par le dispositif de services DFS. En outre, le profil du premier utilisateur est en particulier stocké dans une base de données de profil BDD_PFL du dispositif de fourniture de services DFS regroupant les profils des utilisateurs ayant souscrit au service d'enrichissement.

Le premier utilisateur U1 demande une gestion d'un contenu multimédia dmd_mngt(c). Lors de la gestion soit au début du traitement, soit en cours de traitement, soit une fois le traitement terminé (notamment la création d'un contenu multimédia) par un procédé de gestion MNGT(c) du contenu multimédia c, le terminal de communication du premier utilisateur U1 mettant en oeuvre le procédé de gestion MNGT(c) demande l'enrichissement du contenu dmd_rich(c) au dispositif de fourniture de services DFS qui déclenche le procédé d'enrichissement RICH(c) sur ce contenu multimédia.

Le procédé d'enrichissement RICH(c) de contenus multimédia comporte une association ASS_ID d'au moins un identifiant {id}_U1 d'un premier utilisateur U1 avec un contenu multimédia c lors d'une gestion MNGT(c) dudit contenu c par un terminal de communication dudit premier utilisateur U1. L'association ASS_ID permet à un deuxième utilisateur U2 ayant accès REC(c) audit contenu multimédia c de demander un établissement d'une communication TR(mssg) entre un terminal de communication dudit deuxième utilisateur U2 et un terminal de communication dudit premier utilisateur U1 en utilisant un desdits au moins un identifiant dudit premier utilisateur ids.

En particulier, le procédé d'enrichissement RICH(c) comporte une recherche SRCH_ID d'au moins un identifiant dudit premier utilisateur U1 préalablement à ladite association ASS_ID. La recherche SRCH_ID est effectuée, notamment, dans une base de données d'identifiants BDD_ID du dispositif de fourniture de services DFS.

De manière alternative ou complémentaire, le procédé d'enrichissement RICH(c) comporte une demande d'identifiant SK_ID au premier utilisateur U1, notamment, via une interface du terminal de communication (non illustrée).

En particulier, le procédé d'enrichissement RICH(c) comporte une sélection d'au moins un identifiant dudit premier utilisateur SLCT_ID préalablement à ladite association ASS_ID. Pour effectuer cette sélection SLCT_ID, le procédé d'enrichissement RICH(c) pourra utiliser de manière alternative ou complémentaire une demande de sélection à l'utilisateur SK_U et un profil de l'utilisateur stocké dans une base de données de profils BDD_PFL du dispositif de fourniture de services DFS.

En particulier, l'association ASS_ID est effectué par écriture W(c, {id}_U1) desdites au moins un identifiant dudit premier utilisateur dans au moins une métadonnée dudit contenu multimédia c. Soit comme l'illustre la figure 2, le procédé d'enrichissement fournit le ou les identifiants et déclenche l'écriture de ces identifiants dans les métadonnées du contenu multimédia par le procédé de gestion de contenu, soit le procédé d'enrichissement comporte l'écriture (non illustrée) de ces identifiants dans les métadonnées du contenu multimédia, le procédé d'enrichissement ayant reçu le contenu multimédia ou l'adresse du contenu multimédia dans une base de données de contenu BDD_C avec la demande d'enrichissement dmd_rich(c).

De manière alternative, l'association ASS_ID est effectué par enregistrement du contenu multimédia c ou d'un identifiant du contenu multimédia avec au moins un identifiant dudit premier utilisateur {id}_U1 dans une base de données de contenu multimédia BDD_C accessible par tout destinataire dudit contenu multimédia c. Soit comme l'illustre la figure 2, le procédé d'enrichissement fournit le ou les identifiants et déclenche l'enregistrement dans la base de données de contenu BDD_C des identifiants, soit le procédé d'enrichissement comporte l'enregistrement (non illustré) de ces identifiants dans la base de données de contenu BDD_C, le procédé d'enrichissement ayant reçu le contenu multimédia ou l'adresse du contenu multimédia dans une base de données de contenu BDD_C avec la demande d'enrichissement dmd_rich(c).

Ce procédé d'enrichissement de contenus multimédia peut être implémenté, notamment dans un dispositif de fourniture de services, sous la forme d'un programme comprenant des instructions de code de programme pour l'exécution des étapes du procédé d'enrichissement lorsque ledit programme est exécuté par un processeur, notamment un processeur du dispositif de fourniture de services dans l'exemple illustré par la figure 2.

Un procédé de gestion de contenus multimédia MNGT(c) comporte, suite à une demande de gestion d'un contenu multimédia dmd_mngt(c) par un terminal de communication d'un premier utilisateur U1, le déclenchement d'une association ASS_ID d'au moins un identifiant dudit premier utilisateur avec ledit contenu multimédia lors de ladite gestion MNGT(c) dudit contenu multimédia.

En particulier, le procédé de gestion MNGT(c) comporte une demande d'enrichissement dmd_rich(c).

Ce procédé de gestion peut être implémenté, notamment dans un terminal de communication du premier utilisateur, sous la forme d'un programme comprenant des instructions de code de programme pour l'exécution des étapes du procédé de gestion de contenus multimédias lorsque ledit programme est exécuté par un processeur, notamment un processeur du terminal de communication du premier utilisateur.

Le contenu multimédia c associé à un identifiant du premier utilisateur par le procédé d'enrichissement RICH(c) peut être émis TR(c) par le terminal de communication du premier utilisateur U1.

Un terminal de communication d'un deuxième utilisateur U2 recevant le contenu enrichi c met en oeuvre un procédé d'établissement de communication COM(c) du terminal d'un deuxième utilisateur U2 avec un terminal d'un premier utilisateur U1.

En particulier, le procédé d'établissement de communication comporte une réception REC(c) par le terminal de communication du deuxième utilisateur U2 du contenu multimédia c enrichi.

Le procédé d'établissement de communication comporte, notamment, une lecture des métadonnées RTV-U(c) pour retrouver les identifiants associés au contenu multimédia reçu {id}_U(c).

Lorsqu'un contenu multimédia est associé à plusieurs types d'identifiants : numéro de téléphone, adresse email, etc., le procédé d'établissement de communication comporte, en particulier, une sélection SLTC_COM d'un identifiant qui sera utilisé pour établir la communication.

Ce procédé d'établissement de communication COM(c) comporte, suite à une demande de communication dmd_com_U(c)du deuxième utilisateur U2 lors d'un accès au contenu multimédia c enrichi d'au moins un identifiant du premier utilisateur U1, une émission TR(mssg) d'un message mssg(ids) dudit terminal de communication dudit deuxième utilisateur U2 vers un terminal de communication dudit premier utilisateur U1 utilisant un desdits au moins un identifiant dudit premier utilisateur ids.

Ce procédé d'établissement de communication est notamment implémenté sous la forme d'un programme comprenant des instructions de code de programme pour l'exécution des étapes du procédé d'établissement de communication lorsque ledit programme est exécuté par un processeur, tel qu'un processeur du terminal de communication du deuxième utilisateur.

De façon miroir (non illustrée), le deuxième utilisateur peut utiliser un procédé d'enrichissement sur un contenu multimédia avant de le transmettre à un autre utilisateur, notamment au premier utilisateur. Le contenu multimédia sera alors enrichi d'au moins un identifiant du deuxième utilisateur permettant au premier utilisateur utilisant le procédé d'établissement de communication selon l'invention d'établir facilement une communication à partir du contenu multimédia reçu avec le deuxième utilisateur.

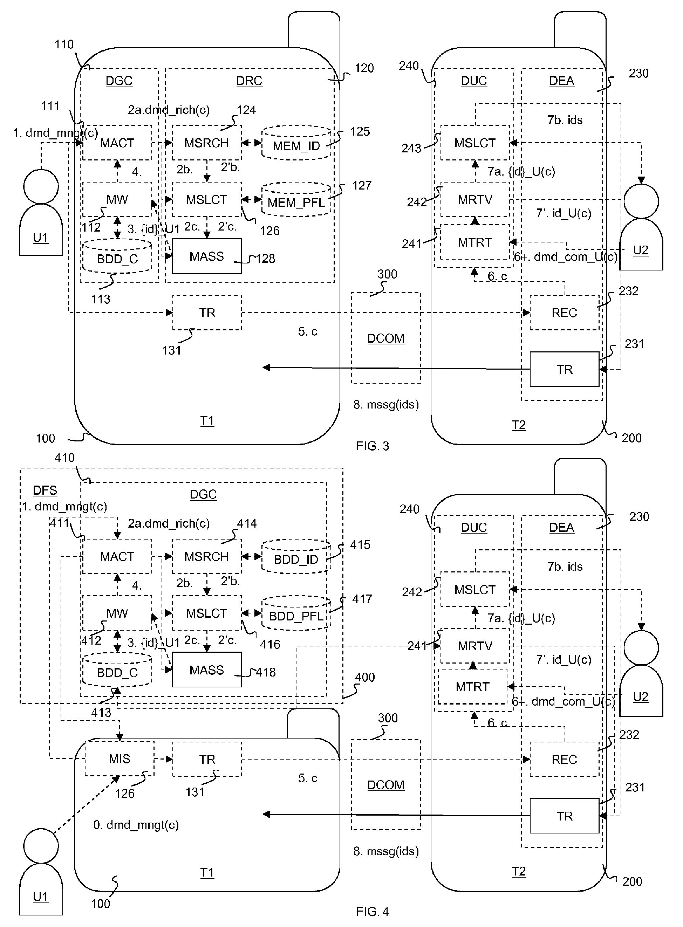

La figure 3 illustre un schéma simplifié d'une première architecture de communication implémentant un dispositif de gestion de contenu et un dispositif d'enrichissement selon l'invention dans un terminal de communication.

L'architecture de communication comporte notamment un terminal de communication T1 100 d'un premier utilisateur U1, un terminal de communication T2200 d'un deuxième utilisateur U2, et éventuellement un dispositif de communication DCOM 300.

Le terminal de communication T1 100 d'un premier utilisateur comporte soit un dispositif d'enrichissement 120 comme l'illustre la figure 3, soit directement des moyens d'association MASS 125 d'au moins un identifiant d'un premier utilisateur U1 avec un contenu multimédia c lors d'une gestion dudit contenu par un terminal de communication T1 100 dudit premier utilisateur. L'association permet à un deuxième utilisateur U2 ayant accès audit contenu multimédia c de demander l'établissement d'une communication entre un terminal de communication T2 200 dudit deuxième utilisateur U2 et un terminal de communication T1 100 dudit premier utilisateur U1 en utilisant un desdits au moins un identifiant dudit premier utilisateur U1.

Le dispositif d'enrichissement de contenus multimédia DRC 120 comporte les moyens d'association MASS 125 d'au moins un identifiant d'un premier utilisateur U1 avec un contenu multimédia c.

En particulier, le dispositif d'enrichissement 120 comporte un ou plusieurs des moyens suivants :
- des moyens de recherche MSRCH 121
- des moyens de sélections MSLCT 123
- une mémoire d'identifiants MEM_ID 122
- une mémoire de profil MEM_PFL 124

Les moyens de recherche 121 sont connectés à la mémoire d'identifiants 122 dans laquelle ils recherchent les identifiants du premier utilisateur U1.

De manière alternative ou complémentaire, le dispositif d'enrichissement 120 comporte des moyens de demande d'identifiant au premier utilisateur U1, notamment, via une interface du terminal de communication (non illustrée).

Les moyens de sélection 123 d'au moins un identifiant dudit premier utilisateur SLCT_ID sont placés préalablement aux moyens d'association 125. Les moyens de sélection 123 sont notamment connectés à la mémoire de profil 124 pour effectuer cette sélection en fonction d'un profil du premier utilisateur U1. De manière alternative ou complémentaire Les moyens de sélection 123 demandent à l'utilisateur SK_U de sélectionner un ou plusieurs identifiants, notamment, via une interface du terminal de communication (non illustrée).

En particulier, les moyens d'association 125 déclenchent une écriture desdits au moins un identifiant dudit premier utilisateur U1 dans au moins une métadonnée dudit contenu multimédia c.

De manière alternative, les moyens d'association 125 enregistre (non illustré) le contenu multimédia c ou un identifiant du contenu multimédia avec au moins un identifiant dudit premier utilisateur {id}_U1 dans une base de données de contenu multimédia BDD_C accessible par tout destinataire dudit contenu multimédia c et déclenche, comme l'illustre la figure 3, l'enregistrement dans la base de données de contenu BDD_C des identifiants.

En particulier, le terminal de communication 100 comporte un dispositif de gestion de contenu multimédia DGC 110. Le dispositif de gestion de contenu 110 demande l'enrichissement du contenu dmd_rich (c) soit directement aux moyens d'association 125 qui commandera éventuellement les moyens de recherche 121 et/ou les moyens de sélection 123 (non illustré), soit de manière plus générale au dispositif d'enrichissement 120 comme l'illustre la figure 3, soit les moyens de recherche 121 (non illustré).

Le dispositif de gestion de contenu 110 comporte (non illustré), notamment, le dispositif d'enrichissement 120 ou les moyens d'association 125.

En particulier, le dispositif de gestion de contenu 110 comporte un ou plusieurs des moyens suivants :
- des moyens des traitements MACT 111
- des moyens d'écriture et/ou d'enregistrement 112
- une base de données de contenus BDD_C 113

Les moyens de traitements 111 reçoivent une demande de gestion d'un contenu 1. dmd_mngt(c) du premier utilisateur U1. Les moyens de traitements sont connectés soit directement aux moyens d'association 125 (non illustré), soit au dispositif d'enrichissement 120 pour transmettre une demande d'enrichissement du contenu géré dmd_rich(c) préalablement, postérieurement au traitement, ou à un moment prédéterminé du traitement.

En particulier, lors d'une gestion consistant en une émission du contenu par un mode de communication prédéfini tel qu'email, MMS, etc., les moyens de traitements 111, sont connectés à des moyens d'émission TR 131. Les moyens de traitement 111 joignent le contenu une fois enrichi au message et transmettent le message avec le contenu enrichi joint aux moyens d'émission 131.

En particulier, les moyens de traitement 111 sont connectés à la base de données de contenu 113 (non illustré) notamment pour charger le contenu sélectionné en vue d'effectuer son traitement et/ou de l'envoyer au dispositif d'enrichissement 120.

En particulier les moyens d'écriture et/ou d'enregistrement 112 sont connectés aux moyens d'association 125 qui les contrôlent. Les moyens d'écriture et/ou d'enregistrement 112 sont notamment connectés à la base de données de contenu 113 pour écrire soit dans les métadonnées d'un contenu de la base de données, soit pour enregistrer dans la base de données les identifiants en lien avec un contenu de la base de données, soit pour enregistrer un contenu enrichi.

En particulier, les moyens d'écriture et/ou d'enregistrement 112 sont connectés aux moyens de traitement 111 soit pour transmettre le contenu enrichi, soit pour informer que l'enrichissement est terminé, et/ou pour déclencher l'étape suivante du traitement.

Le terminal de communication 200 du deuxième utilisateur U2 comporte un dispositif d'établissement de communication DEA 230 d'un terminal 200 d'un deuxième utilisateur avec un terminal 100 d'un premier utilisateur apte à émettre un message. Le message est émis 8. mss(ids), suite à une demande de communication 6+. Dmd_com_U(c) du deuxième utilisateur U2 lors d'un accès à un contenu multimédia enrichi d'au moins un identifiant d'un premier utilisateur, dudit terminal de communication 200 dudit deuxième utilisateur vers un terminal de communication 100 dudit premier utilisateur utilisant un desdits au moins un identifiant dudit premier utilisateur U1.

Le dispositif d'établissement de communication 230 du terminal 200 du deuxième utilisateur avec un terminal 100 du premier utilisateur U1 comporte un émetteur TR 231 de messages suite à une demande de communication 6+. Dmd_com_U(c) du deuxième utilisateur U2 lors d'un accès à un contenu multimédia enrichi d'au moins un identifiant du premier utilisateur.

En particulier, le dispositif d'établissement de communication 230 comporte des moyens de réception REC 232. Les moyens de réceptions 232 reçoivent notamment des messages d'un terminal 100 d'un premier utilisateur U1 comportant un contenu multimédia enrichi 5. c, par exemple via un dispositif de communication DCOM, ou des contenus multimédia enrichis publiés ou partagés. Les moyens de réceptions 232 sont connectés au moins indirectement au moyens d'émission 231 de tels sorte qu'un contenu multimédia enrichi reçu par les moyens de réception 232 d'un terminal 100 d'un premier utilisateur U1 permette aux moyens d'émission 231 suite à une demande du deuxième utilisateur U2 6+. Dmd_com_U(c) d'émettre un message vers le terminal 100 du premier utilisateur dont l'identifiant enrichi le contenu multimédia c reçu.

En particulier, le terminal de communication 200 comporte un dispositif d'utilisation de contenus multimédia enrichis DUC 240. Dans un mode de réalisation non illustré, le dispositif d'établissement de communication 230 comporte le dispositif d'utilisation de contenu 240.

Par utilisation de contenus multimédia enrichis est entendu notamment l'affichage de lien vers au moins une partie de l'ensemble des contenus multimédias disponibles sur le terminal de communication 200, l'affichage d'un message comportant un contenu multimédia enrichi avec un lien permettant l'ouverture dudit contenu multimédia, la reproduction, la modification, la publication, le partage du contenu multimédia, l'insertion du contenu multimédia dans un message, etc. c'est-à-dire tout utilisation nécessitant un accès direct ou du moins à un lien vers ledit contenu multimédia.

En particulier, le dispositif d'utilisation de contenu 240 comporte un ou plusieurs des moyens suivants :
- des moyens des traitements MTRT 241
- des moyens de récupération MRTV 242
- des moyens de sélection MSLCT 243

Les moyens de traitements 241 sont aptes à recevoir un contenu multimédia enrichi 6. c notamment des moyens de réception 232 auxquels ils sont, en particulier, connectés. Les moyens de traitements 241 comportent, par exemple une interface, permettant au deuxième utilisateur U2 de demander 6+. Dmd_com_U(c) la mise en communication avec l'utilisateur lui ayant transmis le contenu multimédia en cours de consultation, en l'occurrence avec le premier utilisateur U1.

Les moyens de traitement 241 sont notamment connectés à des moyens de récupération 242 apte à lire des métadonnées du contenu multimédia enrichi c en cours d'utilisation pour retrouver les identifiants associés au contenu multimédia reçu 7a. {id}_U(c).

Les moyens de récupération 242 sont en particulier connectés à des moyens de sélection 243. Ainsi, lorsqu'un contenu multimédia c est associé à plusieurs types d'identifiants, les moyens de récupération 242 fournisse la liste des identifiants lue dans les métadonnées du contenu multimédia enrichi c aux moyens de sélection 243.

Les moyens de sélection 243 comportent, par exemple, une interface permettant au deuxième utilisateur U2 de sélectionner l'un des identifiants ou un mode de communication, etc. : les moyens de sélection 243 sélectionneront un identifiant en fonction de la sélection faite par le deuxième utilisateur U2.

Les moyens de sélection 243 et/ou les moyens de récupération sont notamment connectés aux moyens d'émission 231 permettant de transmettre un identifiant 7'. id_U(c), 7b. ids du premier utilisateur U1.

De façon miroir (non illustrée), le terminal 200 du deuxième utilisateur U2 peut comporter un dispositif d'enrichissement sur un contenu multimédia avant de le transmettre à un autre utilisateur, notamment au terminal 100 du premier utilisateur U1. Le contenu multimédia sera alors enrichi d'au moins un identifiant du deuxième utilisateur permettant au terminal 100 du premier utilisateur comportant un dispositif d'établissement de communication selon l'invention d'établir facilement une communication à partir du contenu multimédia reçu avec le deuxième utilisateur.

La figure 4 illustre un schéma simplifié d'une première architecture de communication implémentant un dispositif de gestion de contenu et un dispositif d'enrichissement selon l'invention dans un dispositif de fourniture de services.

Dans ce mode de réalisation de l'invention, l'architecture de communication comporte notamment un terminal de communication T1 100 d'un premier utilisateur U1, un terminal de communication T2 200 d'un deuxième utilisateur U2, un dispositif de fourniture de services DFS 400 et éventuellement un dispositif de communication DCOM 300.

Le terminal de communication T1 100 d'un premier utilisateur comporte des moyens d'interface MIS 126 avec le dispositif de fourniture de services 400 notamment pour transmettre le demande de gestion de contenu 0. dmd_mngt(c) reçue du premier utilisateur U1.

Le dispositif de fourniture de services 400 comporte soit un dispositif d'enrichissement 420 comme l'illustre la figure 4, soit directement des moyens d'association MASS 425 d'au moins un identifiant d'un premier utilisateur U1 avec un contenu multimédia c lors d'une gestion dudit contenu par le premier utilisateur U1. L'association permet à un deuxième utilisateur U2 ayant accès audit contenu multimédia c de demander l'établissement d'une communication entre un terminal de communication T2 200 dudit deuxième utilisateur U2 et un terminal de communication T1 100 dudit premier utilisateur U1 en utilisant un desdits au moins un identifiant dudit premier utilisateur U1.

Le dispositif d'enrichissement de contenus multimédia DRC 420 comporte les moyens d'association MASS 425 d'au moins un identifiant d'un premier utilisateur U1 avec un contenu multimédia c.

En particulier, le dispositif d'enrichissement 420 comporte un ou plusieurs des moyens suivants :
- des moyens de recherche MSRCH 421
- des moyens de sélections MSLCT 423
- une base de données d'identifiants BDD_ID 422
- une base de données de profils BDD_PFL 424

Les moyens de recherche 421 sont connectés à la base de données d'identifiants 422 dans laquelle ils recherchent les identifiants du premier utilisateur U1.

Les moyens de sélection 423 d'au moins un identifiant dudit premier utilisateur SLCT_ID sont placés préalablement aux moyens d'association 425. Les moyens de sélection 423 sont notamment connectés à la base de données de profils 424 pour effectuer cette sélection en fonction d'un profil du premier utilisateur U1.

En particulier, les moyens d'association 425 déclenchent une écriture desdits au moins un identifiant dudit premier utilisateur U1 dans au moins une métadonnée dudit contenu multimédia c.

De manière alternative, les moyens d'association 425 enregistre (non illustré) le contenu multimédia c ou un identifiant du contenu multimédia avec au moins un identifiant dudit premier utilisateur {id}_U1 dans une base de données de contenu multimédia BDD_C 413 accessible par tout destinataire dudit contenu multimédia c et déclenche, dans l'exemple de la figure 4, l'enregistrement dans la base de données de contenu BDD_C des identifiants.

En particulier, le dispositif de fourniture de services 400 comporte un dispositif de gestion de contenu multimédia DGC 410. Le dispositif de gestion de contenu 410 demande l'enrichissement du contenu dmd_rich (c) au dispositif d'enrichissement 420 dans l'exemple de la figure 4.

Le dispositif de gestion de contenu 410 comporte (non illustré), notamment, le dispositif d'enrichissement 420 ou les moyens d'association 425.

En particulier, le dispositif de gestion de contenu 410 comporte un ou plusieurs des moyens suivants :
- des moyens des traitements MACT 411
- des moyens d'écriture et/ou d'enregistrement 412
- une base de données de contenus BDD_C 413

Les moyens de traitements 411 reçoivent une demande de gestion d'un contenu 1. dmd_mngt(c) du terminal 100 du premier utilisateur U1. Les moyens de traitements 411 sont connectés au dispositif d'enrichissement 420 pour transmettre une demande d'enrichissement du contenu géré dmd_rich(c) préalablement, postérieurement au traitement, ou à un moment prédéterminé du traitement.

En particulier, lors d'une gestion consistant en une émission du contenu par un mode de communication prédéfini tel qu'email, MMS, etc., les moyens de traitements 411, sont connectés à des moyens d'émission TR 131 du terminal 100 du premier utilisateur qui transmettront le contenu enrichi 5.c via notamment un dispositif de communication 300.

En particulier les moyens d'écriture et/ou d'enregistrement 412 sont connectés aux moyens d'association 425 qui les contrôlent. Les moyens d'écriture et/ou d'enregistrement 412 sont notamment connectés à la base de données de contenu 413 pour écrire soit dans les métadonnées d'un contenu de la base de données, soit pour enregistrer dans la base de données les identifiants en lien avec un contenu de la base de données, soit pour enregistrer un contenu enrichi.

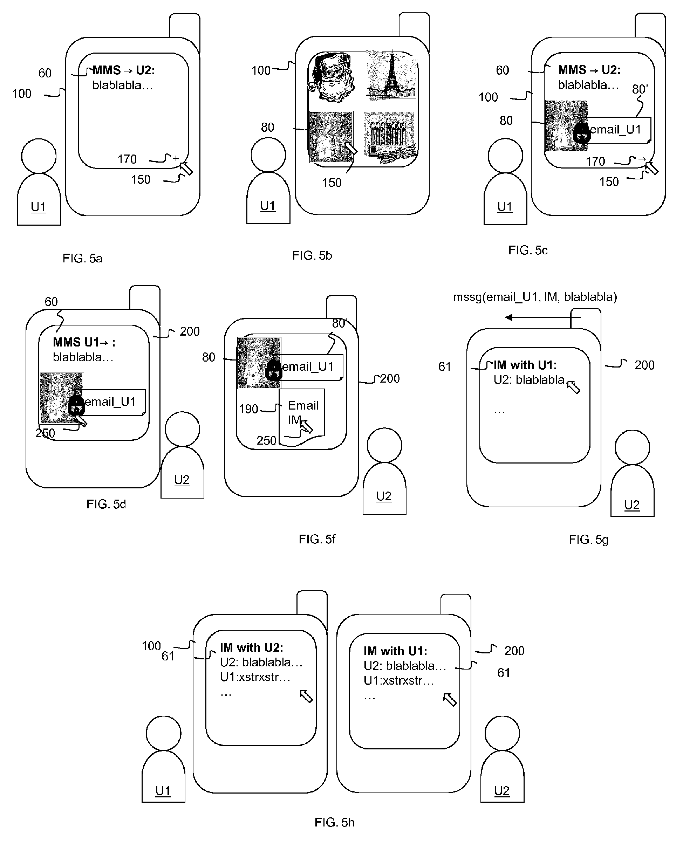

Les figures 5a à 5g illustrent des schémas d'un scénario illustrant une utilisation de l'invention.

Un premier utilisateur U1 écrit un message multimédia tel qu'un MMS 60 à destination d'un deuxième utilisateur U2 sur son terminal de communication, par exemple un téléphone mobile ou Smartphone 100. Le premier utilisateur U1 sélectionne avec son curseur 150 l'option d'insertion d'objets 170 dans son message 60 comme le montre la figure 5a.

L'interface de son téléphone mobile 100 propose, comme objets à insérer, une série d'images à insérer parmi lesquelles le premier utilisateur U1 sélectionne avec son curseur 150 l'image 80 comme le montre la figure 5b.

L'interface du téléphone mobile 100 du premier utilisateur U1 reproduit alors le message multimédia 60 dans lequel l'image 80 préalablement enrichi par le procédé d'enrichissement selon l'invention par un identifiant 80' du premier utilisateur: en l'occurrence l'adresse email du premier utilisateur : email_U1 inscrit dans ses métadonnées (comme l'illustre le cadenas associant l'image 80 et l'identifiant 80'). Le premier utilisateur U1 sélectionne l'envoi 170 du message 60 ainsi constitué au deuxième utilisateur U2 comme le montre la figure 5c.

Le deuxième utilisateur U2 reçoit sur un terminal de communication 200, notamment un Smartphone, le message multimédia 60 provenant du terminal 100 du premier utilisateur. Le deuxième utilisateur U2 veut réagir à l'image reçue mais ne souhaite pas répondre par MMS mais plutôt par messagerie électronique (notamment en raison de la facilité d'archivage des discussions). Le deuxième utilisateur U2 sélectionne avec son curseur 250 l'accès aux options liées au contenu multimédia enrichi reçu dans le message 60 comme le montre la figure 5d.

Le terminal de communication 200 propose en fonction de l'identifiant 80' associé au contenu multimédia 80 une liste de sélection 190 d'un mode de communication : En l'occurrence l'identifiant 80' étant une adresse email, la liste de sélection comporte les modes de communication par messagerie électronique email ou par messagerie instantanée IM. Le deuxième utilisateur sélectionne 250 la messagerie instantanée IM comme l'illustre la figure 5e.

Le Smartphone 200 demande l'ouverture d'une session de messagerie instantanée mssg(email_U1, IM, blablabla) avec un terminal de communication du premier utilisateur U1 associé à l'identifiant 80', en l'occurrence le téléphone mobile 100. Et, le deuxième utilisateur commence une discussion avec le premier utilisateur sur l'image 80 reçue comme le montre la figure 5f.

Ainsi, le premier utilisateur au moyen de son terminal 100 et le deuxième utilisateur au moyen de son terminal 200 échange (figure 5g) par messagerie instantanée dans une session établie à partir d'un contenu multimédia enrichi.

Il peut être envisagé dans un autre scénario qu'entre la réception du MMS (figure 5d) et l'utilisation du contenu enrichi pour établir une communication (figure 5e), le contenu enrichi soit stocké indépendamment du message dans lequel il a été transmis notamment dans un album. Ainsi, en consultant quelques temps plus tard cet album, le deuxième utilisateur U2 souhaite poser une question concernant l'image à la personne qui lui a transmis et/ou à l'auteur du contenu multimédia (c'est-à-dire un premier utilisateur ayant créé le contenu), il lui sera facile sans même recherché le message par lequel le contenu lui a été transmis ou la page de publication ou de partage du contenu de se mettre en relation avec cette personne comme le montre les figures 5e à 5g.

De manière plus générale, un contenu peut être enrichi avec un ou plusieurs identifiants d'un ou plusieurs premiers utilisateurs permettant ainsi d'éventuellement conserver la chaine de transmission du contenu multimédia ou du moins son auteur et/ou le premier utilisateur ayant directement transmis le contenu multimédia au deuxième utilisateur. En outre, cela permet au deuxième utilisateur d'établir simplement une communication ou conférence avec un ou plusieurs des premiers utilisateurs dont au moins un identifiant enrichi ledit contenu multimédia.

L'invention vise aussi un ou plusieurs supports d'informations. Un support d'informations peut être n'importe quelle entité ou dispositif capable de stocker au moins un des programmes selon l'invention. Par exemple, le support peut comporter un moyen de stockage, tel qu'une ROM, par exemple un CD ROM ou une ROM de circuit microélectronique ou encore un moyen d'enregistrement magnétique, par exemple une disquette ou un disque dur.

D'autre part, le support d'informations peut être un support transmissible tel qu'un signal électrique ou optique qui peut être acheminé via un câble électrique ou optique, par radio ou par d'autres moyens. Le programme selon l'invention peut être en particulier téléchargé sur un réseau notamment de type Internet.

Alternativement, le support d'informations peut être un circuit intégré dans lequel le programme est incorporé, le circuit étant adapté pour exécuter ou pour être utilisé dans l'exécution du procédé en question.

Dans une autre implémentation, l'invention est mise en oeuvre au moyen de composants logiciels et/ou matériels. Dans cette optique le terme module peut correspondre aussi bien à un composant logiciel ou à un composant matériel. Un composant logiciel correspond à un ou plusieurs programmes d'ordinateur, un ou plusieurs sous-programmes d'un programme, ou de manière plus générale à tout élément d'un programme ou d'un logiciel apte à mettre en oeuvre une fonction ou un ensemble de fonction selon la description ci-dessous. Un composant matériel correspond à tout élément d'un ensemble matériel (ou hardware) apte à mettre en oeuvre une fonction ou un ensemble de fonctions.

## Revendications

1. Procédé d'enrichissement de contenus multimédia comportant une association d'au moins un identifiant d'un premier utilisateur avec un contenu multimédia lors d'une gestion dudit contenu par un terminal de communication dudit premier utilisateur, ladite association permettant à un deuxième utilisateur ayant accès audit contenu multimédia de demander un établissement d'une communication entre un terminal de communication dudit deuxième utilisateur et un terminal de communication dudit premier utilisateur en utilisant un desdits au moins un identifiant dudit premier utilisateur.

2. Procédé d'enrichissement selon la revendication précédente, **caractérisé en ce que** ledit procédé d'enrichissement comporte une recherche d'au moins un identifiant dudit premier utilisateur préalablement à ladite association.

3. Procédé d'enrichissement selon l'une quelconque des revendications précédentes, **caractérisé en ce que** ledit procédé d'enrichissement comporte une sélection d'au moins un identifiant dudit premier utilisateur préalablement à ladite association.

4. Procédé d'enrichissement selon l'une quelconque des revendications précédentes, dans lequel ladite association est effectué par écriture desdites au moins un identifiant dudit premier utilisateur dans au moins une métadonnée dudit contenu multimédia.

5. Programme comprenant des instructions de code de programme pour l'exécution des étapes du procédé d'enrichissement de contenus multimédia selon l'une quelconque des revendications précédentes lorsque ledit programme est exécuté par un processeur.

6. Dispositif d'enrichissement de contenus multimédia comportant des moyens d'association d'au moins un identifiant d'un premier utilisateur avec un contenu multimédia lors d'une gestion dudit contenu par un terminal de communication dudit premier utilisateur, ladite association permettant à un deuxième utilisateur ayant accès audit contenu multimédia de demander l'établissement d'une communication entre un terminal de communication dudit deuxième utilisateur et un terminal de communication dudit premier utilisateur en utilisant un desdits au moins un identifiant dudit premier utilisateur.

7. Procédé de gestion de contenus multimédia comportant, suite à une demande de gestion d'un contenu multimédia par un terminal de communication d'un premier utilisateur, une association d'au moins un identifiant dudit premier utilisateur avec ledit contenu multimédia lors de ladite gestion dudit contenu multimédia, , ladite association permettant à un deuxième utilisateur ayant accès audit contenu multimédia de demander l'établissement d'une communication entre un terminal de communication dudit deuxième utilisateur et un terminal de communication dudit premier utilisateur en utilisant un desdits au moins un identifiant dudit premier utilisateur.

8. Programme comprenant des instructions de code de programme pour l'exécution des étapes du procédé de gestion de contenus multimédias selon la revendication précédente lorsque ledit programme est exécuté par un processeur.

9. Dispositif de gestion de contenus multimédia comportant des moyens d'association, suite à une demande de gestion d'un contenu multimédia par un terminal de communication d'un premier utilisateur, d'au moins un identifiant dudit premier utilisateur avec ledit contenu multimédia lors de ladite gestion dudit contenu multimédia, ladite association permettant à un deuxième utilisateur ayant accès audit contenu multimédia de demander l'établissement d'une communication entre un terminal de communication dudit deuxième utilisateur et un terminal de communication dudit premier utilisateur en utilisant un desdits au moins un identifiant dudit premier utilisateur.

10. Terminal de communication comportant des moyens d'association, suite à une demande de gestion d'un contenu multimédia par un terminal de communication d'un premier utilisateur, d'au moins un identifiant dudit premier utilisateur avec ledit contenu multimédia lors de ladite gestion dudit contenu multimédia, ladite association permettant à un deuxième utilisateur ayant accès audit contenu multimédia de demander l'établissement d'une communication entre un terminal de communication dudit deuxième utilisateur et un terminal de communication dudit premier utilisateur en utilisant un desdits au moins un identifiant dudit premier utilisateur.

11. Dispositif de fourniture de services comportant des moyens d'association, suite à une demande de gestion d'un contenu multimédia par un terminal de communication d'un premier utilisateur, d'au moins un identifiant dudit premier utilisateur avec ledit contenu multimédia lors de ladite gestion dudit contenu multimédia, ladite association permettant à un deuxième utilisateur ayant accès audit contenu multimédia de demander l'établissement d'une communication entre un terminal de communication dudit deuxième utilisateur et un terminal de communication dudit premier utilisateur en utilisant un desdits au moins un identifiant dudit premier utilisateur.

12. Procédé d'établissement de communication d'un terminal d'un deuxième utilisateur avec un terminal d'un premier utilisateur comportant, suite à une demande de communication d'un deuxième utilisateur lors d'un accès à un contenu multimédia enrichi d'au moins un identifiant d'un premier utilisateur, une émission d'un message dudit terminal de communication dudit deuxième utilisateur vers un terminal de communication dudit premier utilisateur utilisant un desdits au moins un identifiant dudit premier utilisateur.

13. Programme comprenant des instructions de code de programme pour l'exécution des étapes du procédé d'établissement de communication selon la revendication précédente lorsque ledit programme est exécuté par un processeur.

14. Dispositif d'établissement de communication d'un terminal d'un deuxième utilisateur avec un terminal d'un premier utilisateur comportant un émetteur d'un message, ledit message étant émis, suite à une demande de communication d'un deuxième utilisateur lors d'un accès à un contenu multimédia enrichi d'au moins un identifiant d'un premier utilisateur, dudit terminal de communication dudit deuxième utilisateur vers un terminal de communication dudit premier utilisateur utilisant un desdits au moins un identifiant dudit premier utilisateur.

15. Terminal de communication comportant un dispositif d'établissement de communication d'un terminal d'un deuxième utilisateur avec un terminal d'un premier utilisateur apte à émettre un message, ledit message étant émis, suite à une demande de communication d'un deuxième utilisateur lors d'un accès à un contenu multimédia enrichi d'au moins un identifiant d'un premier utilisateur, dudit terminal de communication dudit deuxième utilisateur vers un terminal de communication dudit premier utilisateur utilisant un desdits au moins un identifiant dudit premier utilisateur.
